# EUROPÄISCHE PATENTSCHRIFT

(11) **EP 0 803 607 B1**
(45) Veröffentlichungstag und Bekanntmachung des Hinweises auf die Patenterteilung: **17.10.2001**
(21) Anmeldenummer: 97105205.5
(22) Anmeldetag: 27.03.1997
(51) Int. Cl.: D21G 1/02, F16C 13/00

(54) **Biegeeinstellwalze**
Controlled deflection roll
Rouleau à réglage de la flexion

(30) Priorität: 24.04.1996 DE 19616275
(43) Veröffentlichungstag der Anmeldung: 29.10.1997
(73) Patentinhaber: Voith Paper Patent GmbH, 89522 Heidenheim (DE)
(72) Erfinder: van Haag, Rolf, Dr.-Ing., 47647 Kerken (DE); Dornfeld, Peter, 47803 Krefeld (DE)
(74) Vertreter: Knoblauch, Andreas, Dr.-Ing.

(56) Entgegenhaltungen:
- EP-A- 0 451 470
- EP-A- 0 697 483

## Beschreibung

Die Erfindung betrifft eine Biegeeinstellwalze mit einem Walzenmantel, der über Stützelemente an einem Träger abgestützt ist, wobei Druckkammern zwischen den Stützelementen und dem Träger vorgesehen sind und jede Druckkammer mit einer Versorgungsleitung verbunden ist.

Derartige Biegeeinstellwalzen, die auch als Durchbiegungs-Einstellwalzen bezeichnet werden vgl. die EP 0 451 470 A, werden in Walzenmaschinen, wie Kalandern oder Glättwerken, eingesetzt, um durchlaufende Materialbahnen, insbesondere Papierbahnen, mit Druck zu beaufschlagen. Hierbei bildet eine Biegeeinstellwalze mit einer Gegenwalze einen Walzenspalt, durch den die Materialbahn geführt wird. Um die Druckbeaufschlagung über die Breite des Walzenspalts, also quer zur Durchlaufrichtung der Materialbahn, möglichst gleichmäßig zu halten, sind die Stützelemente vorgesehen, mit denen die Druckverhältnisse im Walzenspalt eingestellt werden können. Die Stützelemente werden hierbei von einem Druckfluid, beispielsweise einem Hydrauliköl, beaufschlagt. Ihre Ausbildung ist an sich bekannt.

Um die Druckverteilung möglichst feinstufig auflösen zu können, ist es erwünscht, die einzelnen Stützelemente einzeln oder zumindest in kleinen Gruppen anzusteuern. Hierfür ist eine große Anzahl von Versorgungsleitungen notwendig. Mit der Breite der Walzen steigt auch die Anzahl der Versorgungsleitungen. Die Versorgungsleitungen müssen durch den Träger geführt werden. Dort steht aber nur ein begrenzter Raum zur Verfügung, so daß der Querschnitt der einzelnen Versorgungsleitungen einen bestimmten Wert nicht übersteigen kann. Größere Querschnitte würden den Träger stärker schwächen, so daß er seine Stützfunktion nicht mehr im erforderlichen Maße wahrnehmen kann.

Für die Steuerung der Druckverteilung führt dies im allgemeinen nicht zu Problemen. Probleme treten allerdings bei sogenannten Schnelltrennvorgängen der Walzenmaschinen auf. Insbesondere bei Walzen mit Mantelhub muß zum Entlasten der Stützelemente oder zum schnellen Absenken des Mantels die Hydraulikflüssigkeit aus den Druckkammern der Stützelemente so rasch wie möglich entfernt werden. Dies ist aber aufgrund der engen Querschnitte der Versorgungsleitungen nicht in zufriedenstellender Weise zu realisieren.

Der Erfindung liegt die Aufgabe zugrunde, auch bei einer feinen Auflösung der Druckverteilung eine schnelle Entlastung der Druckkammern bewirken zu können.

Diese Aufgabe wird bei einer Biegeeinstellwalze der eingangs genannten Art dadurch gelöst, daß jede Druckkammer direkt mit einem zusätzlich zu der Versorgungsleitung vorgesehenen Auslaßkanal in Verbindung steht, der über ein Ablaßventil verschließbar ist.

Man ist daher bei der Druckentlastung nicht mehr auf die Versorgungsleitung angewiesen. Die Hydraulikflüssigkeit kann vielmehr über den Auslaßkanal aus der Druckkammer abgeführt werden. Damit dies nur dann erfolgt, wenn dies gewünscht ist, also nicht während des normalen Walzenbetriebes, ist das Ablaßventil vorgesehen, mit dem die Entlastung der Druckkammern gezielt steuerbar ist.

Vorzugsweise mündet der Auslaßkanal in einen Raum zwischen Walzenmantel und Träger. Aus diesem Raum wird Öl, das beispielsweise bei der Verwendung von hydrostatischen Stützelementen immer dorthin gelangt, ständig abgeleitet, so daß der Ringraum zwischen dem Walzenmantel und dem Träger nicht mit Öl gefüllt und weitgehend drucklos ist. Wenn man daher das Ablaßventil öffnet, wird das Öl aus der Druckkammer mit dem dort vorhandenen Druck in den Raum zwischen Walzenmantel und Träger hinausgedrückt. Es ist zuvor kein Druckabbau nötig, wie dies beispielsweise in den Versorgungsleitungen der Fall wäre.

Auch ist bevorzugt, wenn der Auslaßkanal einen geringeren Strömungswiderstand als die Versorgungsleitung aufweist. Dies wird im allgemeinen dadurch realisiert werden können, daß der Auslaßkanal eine geringere Länge als die Versorgungsleitung aufweist. Zusätzlich kann man den Auslaßkanal auch noch mit einem größeren Strömungsquerschnitt versehen.

Vorzugsweise weist jede Druckkammer eine eigene Versorgungsleitung und einen eigenen Auslaßkanal auf. Zwar reicht es in vielen Fällen aus, die einzelnen Stützelemente und damit die einzelnen Druckkammern gruppenweise zusammenzufassen und gruppenweise zu steuern. Wenn man aber jedes Stützelement mit einer eigenen Versorgungsleitung versieht, ist die Steuerung der Druckverteilung entsprechend einfacher. Auch das Entlasten kann dann mit einer höheren Geschwindigkeit erfolgen, weil die Hydraulikflüssigkeit aus jeder Druckkammer unmittelbar abfließen kann.

Vorzugsweise zweigt der Auslaßkanal von einem Zwischenkanal zwischen dem Druckraum und der Versorgungsleitung ab. Konstruktive Änderungen im Bereich der Druckkammer sind daher nicht notwendig. Insbesondere kann man Strömungsverhältnisse, die sich bewährt haben, beibehalten. Es ist lediglich notwendig, in den Träger einen zusätzlichen Kanal einzubringen.

Mit Vorteil sind die Ablaßventile zumindest mit einem Teil ihres Körpers außen auf den Träger aufgesetzt. Dies vereinfacht die Herstellung. Insbesondere die beweglichen Teile können dann in einem Gehäuse untergebracht werden, das außen am Träger befestigt ist. Größere Bearbeitungen des Trägers können dann vermieden werden.

Hierbei ist besonders vorteilhaft, wenn die Ablaßventile etwa um 90° zur Position der Stützelemente versetzt angeordnet sind. In dieser Position stören sie die Hubbewegung des Walzenmantels am wenigsten. Eine Einschränkung der Bewegung des Walzenmantels erfolgt praktisch nicht.

Vorzugsweise sind alle Ablaßventile gleichzeitig betätigbar. Wenn ein Schnelltrennvorgang notwendig wird, reicht dann ein einzelnes Kommando aus, um die Entlastung aller Druckkammern bewirken zu können.

Hierbei ist besonders bevorzugt, wenn für alle Ablaßventile eine gemeinsame Betätigungseinrichtung vorgesehen ist. Diese Betätigungseinrichtung stellt dann über einen mechanischen Zusammenhang zwangsläufig die gemeinsame Betätigung der Ablaßventile sicher.

Vorzugsweise ist die Betätigungseinrichtung als Schieber ausgebildet. Ein derartiger Schieber läßt sich auf dem Träger gut unterbringen und von einem Ende aus betätigen.

Dies gilt insbesondere dann, wenn der Schieber im wesentlichen parallel zur Axialrichtung des Trägers bewegbar ist. Eine derartige Axialbewegung läßt sich auch von einem axialen Ende des Trägers gut steuern.

Mit Vorteil weist der Schieber als Antrieb eine Kolben-Zylinder-Einrichtung auf. Eine derartige Kolben-Zylinder-Einrichtung kann dann ebenfalls mit Hydraulikfluid betätigt werden, das bei der Biegeeinstellwalze ohnehin zur Verfügung steht. Es sind also keine weiteren Druckerzeugungsmechanismen notwendig.

Hierbei ist besonders bevorzugt, wenn der Schieber zumindest an einem Ende als Kolben ausgebildet ist, der verschiebbar in einem Zylinder angeordnet ist. Dies erleichtert die Herstellung. Eine Verbindung zwischen dem Schieber und dem Kolben der Kolben-Zylinder-Einrichtung ist nicht notwendig. Diese ist vielmehr bereits durch den Schieber selbst gegeben. Der Kolben kann hierbei auch als Plungerkolben ausgebildet sein.

Vorzugsweise sind die Ablaßventile als Schieberventile mit Ventilschiebern ausgebildet. Der Strömungspfad wird freigegeben, indem eine Durchgangsbohrung des Ventilschiebers über eine entsprechende Mündung des Auslaßkanals geschoben wird. Wenn diese Überdeckung nicht hergestellt ist, ist das Ablaßventil geschlossen. Ein derartiger Ventilaufbau ist leicht realisierbar. Ein derartiges Ventil läßt sich relativ leicht betätigen.

Vorzugsweise sind hierbei die Ventilschieber der Ablaßventile in Axialrichtung aneinander befestigt. Ein getrennter Schieber ist dann nicht mehr notwendig. Die Ventilschieber bilden dann selbst die Betätigungseinrichtung.

In einer anderen Ausgestaltung weist jedes Ablaßventil ein Verschlußstück auf, das in die Mündung des Auslaßkanals hineinbewegbar ist. Dort kann es entweder zur Anlage an eine Stirnfläche gelangen, um ein Abdichten herbeizuführen, oder es kann nach Art eines Stopfens in die Mündung eingeführt werden, wodurch ebenfalls eine ausreichende Dichtigkeit erzielt wird. Eine absolute Dichtigkeit ist in den meisten Fällen nicht erforderlich, weil die Stützelemente ohnehin immer einen gewissen Leckverlust aufweisen.

Hierbei ist bevorzugt, daß der Schieber über eine Schrägfläche auf die Verschlußstücke wirkt. Die Axialbewegung läßt sich dann relativ leicht in eine Radialbewegung der Verschlußstücke umsetzen.

Vorzugsweise sind die Ablaßventile als selbstöffnende Ventile ausgebildet. Dies ist ein zusätzlicher Sicherheitsaspekt. Wenn beispielsweise ein Ausfall der Versorgungseinrichtung auftritt und kein Druck in der Kolben-Zylinder-Einrichtung mehr zur Verfügung steht, öffnen die Ventile, was eine Schnelltrennung der Walzen des Kalanders bewirkt. Würde man die Ventile umgekehrt ansteuern, wäre eine derartige Schnelltrennung nach dem Ausfall der Versorgung nicht mehr gewährleistet.

Die Erfindung wird im folgenden anhand von bevorzugten Ausführungsbeispielen in Verbindung mit der Zeichnung beschrieben. Hierin zeigen:
- Fig. 1: einen schematischen Längsschnitt durch einen Teil einer Biegeeinstellwalze,
- Fig. 2: einen schematischen Querschnitt,
- Fig. 3: eine erste Ausgestaltung der Ablaßventile und
- Fig. 4: eine zweite Ausgestaltung der Ablaßventile.

Eine Biegeeinstellwalze 1 weist einen Walzenmantel 2 auf, der über Stützelemente 3 an einem Träger 4 abgestützt ist. Der Träger 4 kann auch als Achse der Walze bezeichnet werden. Im vorliegenden Fall ist die Biegeeinstellwalze 1 als Mantelhubwalze, d.h. als Walze mit Mantelhub, ausgebildet.

Jedes Stützelement weist eine Druckkammer 5 auf, die im vorliegenden Fall individuell mit Druckflüssigkeit, beispielsweise Hydrauliköl, beaufschlagt werden kann. Die Druckkammer 5 ist, wie ersichtlich, zwischen dem Stützelement 3 und dem Träger 4 angeordnet. Hierzu ist für jede Druckkammer 5 eine Versorgungsleitung 6 vorgesehen. Durch die Versorgungsleitung 6 kann der Druck in der Druckkammer gesteuert werden. Die Versorgungsleitungen 6 bilden ein Rohrbündel 7, das in einer Zentralbohrung 8 des Trägers 4 angeordnet ist.

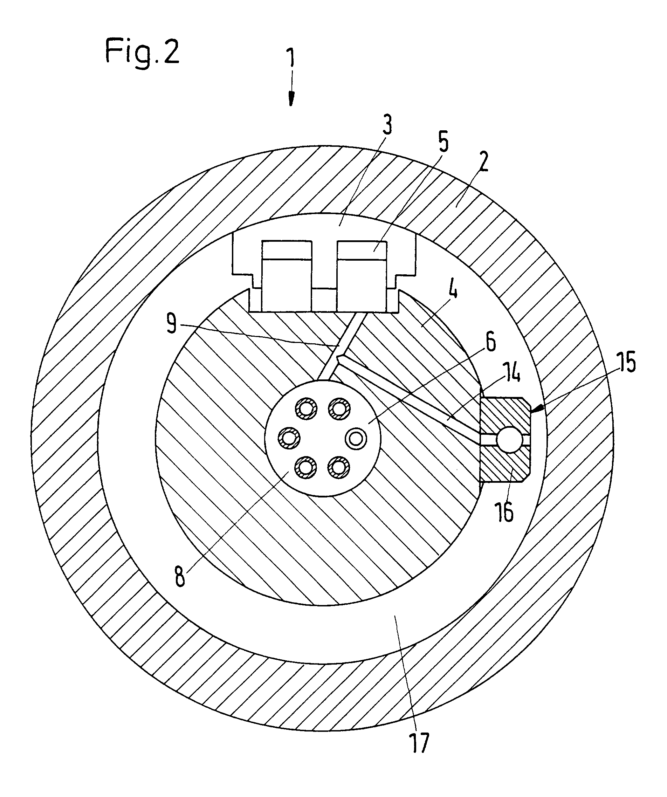

Die Zentralbohrung 8 ist über Zwischenkanäle 9 mit den Druckkammern 5 verbunden. Um die Einzelansteuerung der Druckkammern 5 zu ermöglichen, sind in der Zentralbohrung 8 jeweils Trennwände 10 mit Dichtungen 11 zwischen den Mündungen der Zwischenkanäle 9 in die Zentralbohrung 8 angeordnet. An jeder Trennwand 10 mündet eine Versorgungsleitung 6. Dies ist in Fig. 2 dadurch erkennbar, daß die entsprechende Versorgungsleitung 6 nicht mehr geschnitten dargestellt ist.

Auf der den Stützelementen 3 gegenüberliegenden Seite sind Gegenelemente 12 angeordnet, die ebenfalls mit Hydraulikflüssigkeit beaufschlagt werden können und zwar einerseits, um ein schnelleres Absenken des Walzenmantels 2 zu bewirken und andererseits, um eine Entlastung der Walzenenden zu bewirken.

An den Walzenenden sind ferner verschiebbare Dichtungs- und Lageranordnungen 13 vorgesehen, wie sie von Biegeeinstellwalzen mit Mantelhub allgemein bekannt sind.

Wie insbesondere aus Fig. 2 ersichtlich ist, zweigt von dem Zwischenkanal 9 ein Auslaßkanal 14 ab, der mit Hilfe eines Ablaßventils 15 verschließbar ist. In Fig. 2 ist das Ablaßventil 15 in seiner geöffneten Stellung dargestellt.

Das Ablaßventil weist ein Ventilgehäuse 16 auf, das außen auf dem Träger 4 aufgesetzt ist. Das Ablaßventil 15 ist etwa um 90° versetzt zu den Stützelementen 3 angeordnet. Wenn der Walzenmantel 2 abgesenkt wird, stört das Ablaßventil 15 auch dann nicht, wenn es, wie dargestellt, außen an den Träger 4 angesetzt ist.

Der Auslaßkanal 14 mündet dann, wenn das Ablaßventil 15 geöffnet ist, in einen Ringraum 17 zwischen dem Walzenmantel 2 und dem Träger 4. In diesen Ringraum fließt insbesondere bei hydrostatischen Stützelementen 3 permanent Öl oder andere Hydraulikflüssigkeit, die dann von dort entfernt werden muß. Da ein permanenter Abfluß oder sogar ein permanentes Abpumpen von Öl aus diesem Ringraum 17 erfolgt, herrscht in dem Ringraum 17 praktisch Tankdruck. Hydraulikflüssigkeit, die durch den Auslaßkanal 14 aus dem Druckraum 5 verdrängt wird, kann dann praktisch ohne Gegendruck in den Ringraum 17 abfließen.

Der Auslaßkanal 14 ist relativ kurz. Er muß lediglich vom Zwischenkanal 9 zum Ringraum 17, d.h. zur Umfangswand des Trägers 4 führen. Auch wenn der Querschnitt genauso groß ist, wie der Querschnitt einer Versorgungsleitung 6, ist der Strömungswiderstand aufgrund der kürzeren Länge wesentlich geringer. Sobald also das Ablaßventil 15 geöffnet wird, kann die Hydraulikflüssigkeit aus den Druckkammern 5 mehr oder weniger schlagartig entweichen.

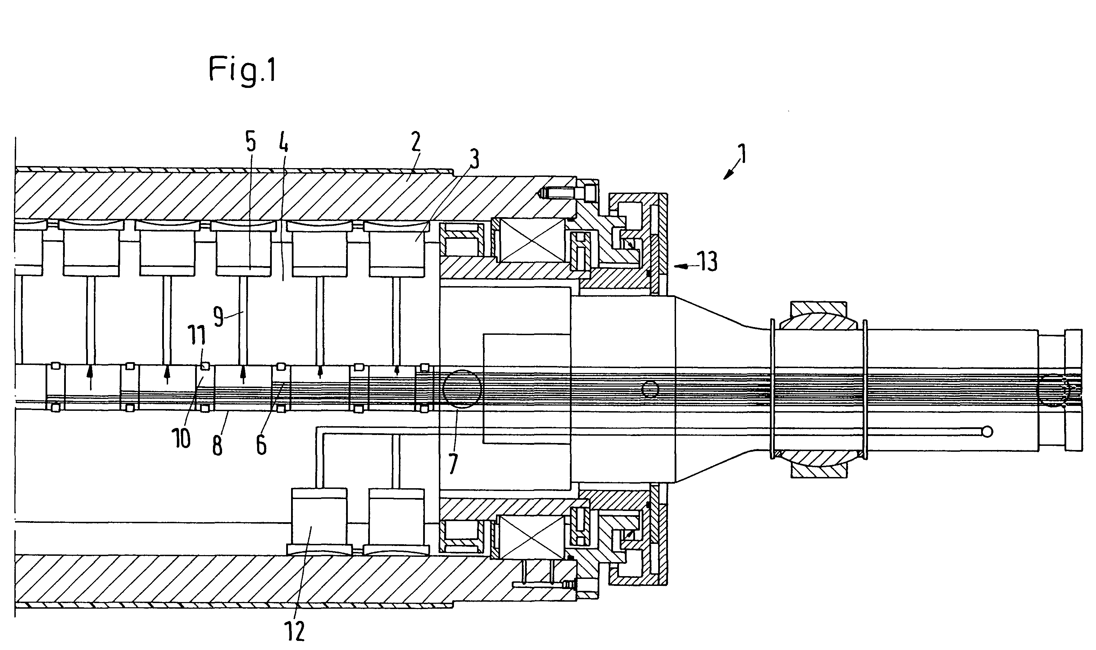

Die Stützelemente 3 an sich sind bekannt. Aus Gründen der Übersichtlichkeit sind daher weder Leitungen noch Drosseln in diesen Stützelementen 3 eingezeichnet. Das vorliegende Stützelement 3 kann beispielsweise einen Ringkolben aufweisen, so daß der Druckraum 5 ringartig ausgebildet ist. Es kann sich aber auch um ein Stützelement 3 mit zwei Kolben handeln. Eine weitere Möglichkeit der Ausführung ist in Fig. 1 dargestellt. Es kommt aber nicht auf die detaillierte Ausbildung der einzelnen Stützelemente 3 an. Wichtig ist lediglich, daß Hydraulikflüssigkeit, die an und für sich zur Druckbeaufschlagung der Stützelemente 3 im normalen Betrieb verwendet wird, beim Schnelltrennen der Walzen über den Auslaßkanal 14 und das Ablaßventil 15 sehr schnell entweichen kann.

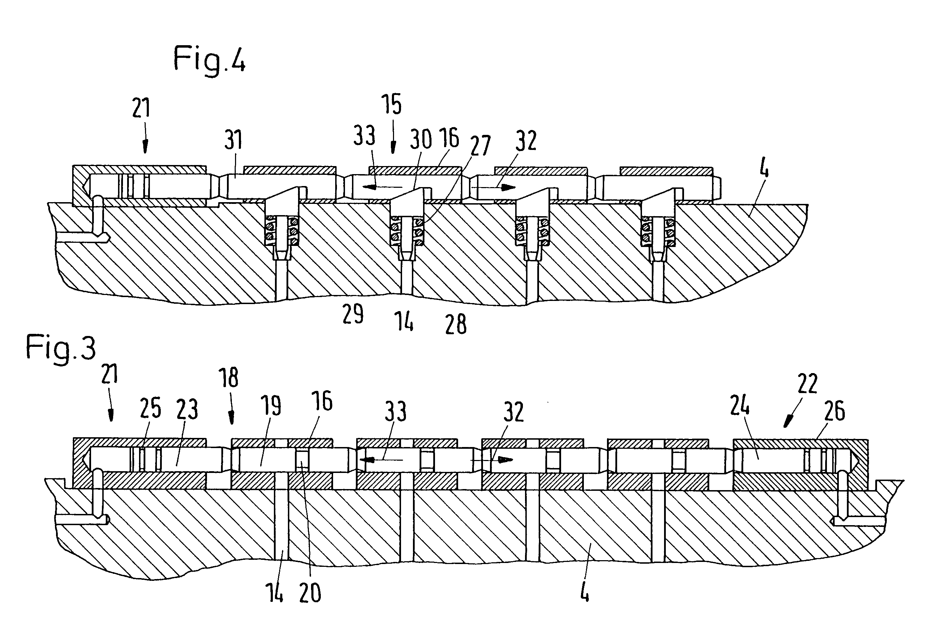

Die Fig. 3 und 4 zeigen Beispiele für eine Ausbildung des Ablaßventils 15. In Fig. 3 ist das Ablaßventil als Schieberventil 18 ausgebildet. Dargestellt in Fig. 3 ist die Stellung, in der das Schieberventil 18 geschlossen ist.

Alle Schieberventile 18 weisen einen gemeinsamen Ventilschieber 19 auf, der für jedes Ablaßventil eine Durchgangsbohrung 20 aufweist. Diese Durchgangsbohrung 20 kann in einer Stellung des Ventilschiebers 19 mit dem Auslaßkanal 14 in Überdeckung gebracht werden. In diesem Fall kann die Hydraulikflüssigkeit aus der Druckkammer 5 abfließen. In der dargestellten Position des Ventilschiebers 19 ist allerdings die Durchgangsbohrung 20 nicht in Überdeckung mit dem Auslaßkanal 14. Die Hydraulikflüssigkeit kann dann nicht durch den Ventilschieber 19 oder an ihm vorbeifließen. Das Ventilgehäuse 16 verschließt zusammen mit dem Ventilschieber 19 die Mündung des Auslaßkanals 14.

Der Antrieb des Ventilschiebers 19 erfolgt durch zwei Kolben-Zylinder-Einrichtungen 21, 22, die an den beiden axialen Enden des Ventilschiebers 19 angeordnet sind. Hierbei ist der Ventilschieber 19 an seinen beiden Enden jeweils so bearbeitet, daß er selbst als Kolben 23, 24 wirkt, der in jeweils einen Zylinder 25, 26 eingesetzt ist. Wenn der Zylinder 25 (in Fig. 3 links) unter Druck gesetzt wird, verschiebt sich der Ventilschieber 19 nach rechts und schließt die Schieberventile 18. Wenn die Kolben-Zylinder-Einrichtung 22 unter Druck gesetzt wird, verschiebt sich der Ventilschieber 19 nach links und öffnet und die Ablaßventile. Zur Betätigung der Kolben-Zylinder-Einrichtungen 21, 22 kann man die gleiche Hydraulikflüssigkeit verwenden, die auch zum Aufbringen des Drucks in den Stützelementen verwendet wird.

Anstelle der Kolben-Zylinder-Einrichtung 22, die zum Öffnen der Schieberventile 18 verwendet wird, kann man auch eine Feder vorsehen, die die Schieberventile 18 immer dann öffnet, wenn der Druck in der Kolben-Zylinder-Einrichtung 21 absinkt. Bei Ausbleiben dieses Drucks werden die Schieberventile 18 also automatisch geöffnet.

Fig. 4 zeigt eine andere Ausgestaltung, bei der die Ablaßventile 15 ein Verschlußstück 27 aufweisen, das nach Art eines Stopfens in die Mündung des Auslaßkanals 14 eingeführt werden kann. In Fig. 4 sind die Ablaßventile 15 in ihrem geöffneten Zustand dargestellt. Das Verschlußstück 27 wird von einer Druckfeder 28 in seine Öffnungsstellung gedrückt. Hydraulikflüssigkeit kann dann aus dem Auslaßkanal 14 an dem Verschlußstück 27 vorbei in einen Raum 29 fließen, aus dem es nicht dargestellter Weise in den Ringraum 17 zwischen Walzenmantel 2 und Träger 4 gelangt.

Das Verschlußstück 27 wird über eine Schrägfläche 30 von einem Schieber 31 betätigt, der etwa in Axialrichtung parallel zum Träger 4 verschiebbar ist, wie dies durch Pfeile 32, 33 dargestellt ist. Wenn der Schieber 31 in Richtung des Pfeiles 32 verschoben wird, werden die Ventile 15 geschlossen. Wenn der Schieber 31 in Richtung des Pfeiles 33 bewegt wird, werden die Ventile 15 geöffnet. Das gleiche gilt für die Ventile in Fig. 3.

Zum Schließen der Ventile ist ebenfalls eine Kolben-Zylinder-Einrichtung 21 am linken Ende des Schiebers 31 vorgesehen, die, genau wie ihr entsprechendes Gegenstück in Fig. 3, mit Hydraulikflüssigkeit beaufschlagt werden kann. Wenn der Schieber 31 dann nach rechts bewegt wird, wirkt er auf die Schrägfläche 30 eines jeden Verschlußstücks 27 und bewegt es radial nach innen, um die Mündung des Auslaßkanals 14 zu verschließen.

In einer alternativen, nicht dargestellten Ausführungsform kann das Verschlußstück 27 auch auf eine die Mündung des Auslaßkanals 14 umgebende Stirnfläche wirken. Mit der in Fig. 4 dargestellten Ventilanordnung ist jedoch ebenfalls eine gute Dichtigkeit des Ablaßventils 15 gewährleistet.

Sowohl der Ventilschieber 19 in Fig. 3 als auch der Schieber 31 in Fig. 4 können aus mehreren gleichartig ausgebildeten Teilstücken zusammengesetzt werden. Insbesondere können die Teilstücke miteinander verschraubt sein. Gegebenenfalls kann man auch noch Distanzstücke zwischen einzelnen Schieberteilstücken verwenden, wenn dies erforderlich ist. Mit dieser Ausgestaltung wird über die mechanische Verbindung der einzelnen Teilstücke sichergestellt, daß alle Ventile 15, 18 gleichzeitig geöffnet oder geschlossen werden.

## Patentansprüche

1. Biegeeinstellwalze (1) mit einem Walzenmantel (2), der über Stützelemente (3) an einem Träger (4) abgestützt ist, wobei Druckkammern (5) zwischen den Stützelementen (3) und dem Träger (4) vorgesehen sind und jede Durckkammer (5) mit einer Versorgungsleitung (6) verbunden ist, **dadurch gekennzeichnet, daß** jede Druckkammer (5) mit einem zusätzlich zu der Versorgungsleitung (6) vorgesehenen Auslaßkanal (14) in Verbindung steht, der über ein Ablaßventil (15) verschließbar ist.

2. Biegeeinstellwalze nach Anspruch 1, **dadurch gekennzeichnet, daß** der Auslaßkanal (14) in einen Raum (17) zwischen Walzenmantel (2) und Träger (4) mündet.

3. Biegeeinstellwalze nach Anspruch 1 oder 2, **dadurch gekennzeichnet, daß** der Auslaßkanal (14) einen geringeren Strömungswiderstand als die Versorgungsleitung (6) aufweist.

4. Biegeeinstellwalze nach einem der Ansprüche 1 bis 3, **dadurch gekennzeichnet, daß** jede Druckkammer (5) eine eigene Versorgungsleitung (6) und einen eigenen Auslaßkanal (14) aufweist.

5. Biegeeinstellwalze nach einem der Ansprüche 1 bis 4, **dadurch gekennzeichnet, daß** der Auslaßkanal (14) von einem Zwischenkanal (9) zwischen dem Druckraum (5) und der Versorgungsleitung (6) abzweigt.

6. Biegeeinstellwalze nach einem der Ansprüche 1 bis 5, **dadurch gekennzeichnet, daß** die Ablaßventile (15) zumindest mit einem Teil ihres Körpers (16) außen auf den Träger (4) aufgesetzt sind.

7. Biegeeinstellwalze nach einem der Ansprüche 1 bis 6, **dadurch gekennzeichnet, daß** die Ablaßventile (15, 18) etwa um 90° zur Position der Stützelemente (3) versetzt angeordnet sind.

8. Biegeeinstellwalze nach einem der Ansprüche 1 bis 7, **dadurch gekennzeichnet, daß** alle Ablaßventile (15, 18) gleichzeitig betätigbar sind.

9. Biegeeinstellwalze nach Anspruch 8, **dadurch gekennzeichnet, daß** für alle Ablaßventile (15, 18) eine gemeinsame Betätigungseinrichtung (19, 31) vorgesehen ist.

10. Biegeeinstellwalze nach Anspruch 9, **dadurch gekennzeichnet, daß** die Betätigungseinrichtung (19, 31) als Schieber ausgebildet ist.

11. Biegeeinstellwalze nach Anspruch 10, **dadurch gekennzeichnet, daß** der Schieber (19, 31) im wesentlichen parallel zur Axialrichtung des Trägers bewegbar ist.

12. Biegeeinstellwalze nach Anspruch 10 oder 11, **dadurch gekennzeichnet, daß** der Schieber (19, 31) als Antrieb eine Kolben-Zylinder-Einrichtung (21, 22) aufweist.

13. Biegeeinstellwalze nach Anspruch 12, **dadurch gekennzeichnet, daß** der Schieber (19, 31) zumindest an einem Ende als Kolben (23, 24) ausgebildet ist, der verschiebbar in einem Zylinder (25, 26) angeordnet ist.

14. Biegeeinstellwalze nach einem der Ansprüche 1 bis 13, **dadurch gekennzeichnet, daß** die Ablaßventile als Schieberventile (18) mit Ventilschiebern (19) ausgebildet sind.

15. Biegeeinstellwalze nach Anspruch 14, **dadurch gekennzeichnet, daß** die Ventilschieber (19) der Ablaßventile (18) in Axialrichtung aneinander befestigt sind.

16. Biegeeinstellwalze nach einem der Ansprüche 1 bis 13, **dadurch gekennzeichnet, daß** jedes Ablaßventil (15) ein Verschlußstück (27) aufweist, das in die Mündung des Auslaßkanals (14) hineinbewegbar ist.

17. Biegeeinstellwalze nach Anspruch 16, **dadurch gekennzeichnet, daß** der Schieber (31) über eine Schrägfläche (30) auf die Verschlußstücke (27) wirkt.

18. Biegeeinstellwalze nach einem der Ansprüche 1 bis 17, **dadurch gekennzeichnet, daß** die Ablaßventile (15, 18) als selbstöffnende Ventile ausgebildet sind.

## Claims

1. Deflection-controllable roll (1) comprising a roll shell (2) supported by means of supporting elements (3) on a support (4), pressure chambers (5) being provided between the supporting elements (3) and the support (4) and each pressure chamber (5) being connected to a supply line (6), **characterised in that** each pressure chamber (5) is connected to an outlet channel (14) which is provided in addition to the supply line (6) and can be closed by means of a drain valve (15).

2. Deflection-controllable roll according to claim 1, **characterised in that** the outlet channel (14) opens into a space (17) between the roll shell (2) and the support (4).

3. Deflection-controllable roll according to claim 1 or 2, **characterised in that** the outlet channel (14) has lower flow resistance than the supply line (6).

4. Deflection-controllable roll according to one of claims 1 to 3, **characterised in that** each pressure chamber (5) has its own supply line (6) and its own outlet channel (14).

5. Deflection-controllable roll according to one of claims 1 to 4, **characterised in that** the outlet channel (14) branches off from an intermediate channel (9) between the pressure chamber (5) and the supply line (6).

6. Deflection-controllable roll according to one of claims 1 to 5, **characterised in that** the drain valves (15) are placed on the outside of the support (4) at least by means of part of their bodies (16).

7. Deflection-controllable roll according to one of claims 1 to 6, **characterised in that** the drain valves (15, 18) are arranged in such a manner that they are offset by approximately 90° relative to the position of the supporting elements (3).

8. Deflection-controllable roll according to one of claims 1 to 7, **characterised in that** all of the drain valves (15, 18) can be actuated simultaneously.

9. Deflection-controllable roll according to claim 8, **characterised in that** one common actuating device (19, 31) is provided for all of the drain valves (15, 18).

10. Deflection-controllable roll according to claim 9, **characterised in that** the actuating device (19, 31) is in the form of a slide.

11. Deflection-controllable roll according to claim 10, **characterised in that** the slide (19, 31) can be moved substantially parallel to the axial direction of the support.

12. Deflection-controllable roll according to claim 10 or claim 11, **characterised in that** the slide (19, 31) has a drive in the form of a piston/cylinder device (21, 22).

13. Deflection-controllable roll according to claim 12, **characterised in that** the slide (19, 31) is designed at least at one end as a piston (23, 24) which can be displaceably arranged in a cylinder (25, 26).

14. Deflection-controllable roll according to one of claims 1 to 13, **characterised in that** the drain valves are in the form of slide valves (18) with valve slides (19).

15. Deflection-controllable roll according to claim 14, **characterised in that** the valve slides (19) of the drain valves (18) are secured together in the axial direction.

16. Deflection-controllable roll according to one of claims 1 to 13, **characterised in that** each drain valve (15) has a closure piece (27) which can be moved into the opening of the outlet channel (14).

17. Deflection-controllable roll according to claim 16, **characterised in that** the slide (31) acts on the closure pieces (27) by means of an inclined surface (30).

18. Deflection-controllable roll according to one of claims 1 to 17, **characterised in that** the drain valves (15, 18) are in the form of self-opening valves.

## Revendications

1. Cylindre (1) réglable en flexion, comprenant une enveloppe de cylindre (2) soutenue sur un support (4) via des éléments de soutien (3), dans lequel des chambres à pression (5) sont prévues entre les éléments de soutien (3) et le support (4) et chaque chambre à pression (5) est reliée à une conduite d'alimentation (6), **caractérisé en ce que** chaque chambre à pression (5) communique avec un canal de sortie (14) prévu additionnellement à la conduite d'alimentation (6) et susceptible d'être obturé par une soupape d'échappement (15).

2. Cylindre réglable en flexion selon la revendication 1, **caractérisé en ce que** le canal de sortie (14) débouche dans un espace (17) entre l'enveloppe de cylindre (2) et le support (4).

3. Cylindre réglable en flexion selon l'une ou l'autre des revendications 1 et 2, **caractérisé en ce que** le canal de sortie (14) présente une résistance à l'écoulement plus faible que la conduite d'alimentation (6).

4. Cylindre réglable en flexion selon l'une des revendications 1 à 3, **caractérisé en ce que** chaque chambre à pression (5) comprend une conduite d'alimentation propre (6) et un canal de sortie propre (14).

5. Cylindre réglable en flexion selon l'une des revendications 1 à 4, **caractérisé en ce que** le canal de sortie (14) est en dérivation depuis un canal intermédiaire (9) entre la chambre à pression (5) et la conduite d'alimentation (6).

6. Cylindre réglable en flexion selon l'une des revendications 1 à 5, **caractérisé en ce que** les soupapes d'échappement (15) sont posées à l'extérieur sur le support (4), tout au moins avec une partie de leur corps (16).

7. Cylindre réglable en flexion selon l'une des revendications 1 à 6, **caractérisé en ce que** les soupapes d'échappement (15, 18) sont agencées avec un décalage d'environ 90° par rapport à la position des éléments de soutien (3).

8. Cylindre réglable en flexion selon l'une des revendications 1 à 7, **caractérisé en ce que** toutes les soupapes d'échappement (15, 18) sont susceptibles d'être actionnées simultanément.

9. Cylindre réglable en flexion selon la revendication 8, **caractérisé en ce qu'**il est prévu un dispositif d'actionnement (19, 31) commun pour toutes les soupapes d'échappement (15, 18).

10. Cylindre réglable en flexion selon la revendication 9, **caractérisé en ce que** le dispositif d'actionnement (19, 31) est réalisé sous forme d'un tiroir.

11. Cylindre réglable en flexion selon la revendication 10, **caractérisé en ce que** le tiroir (19, 31) est déplaçable sensiblement parallèlement à la direction axiale du support.

12. Cylindre réglable en flexion selon l'une ou l'autre des revendications 10 et 11, **caractérisé en ce que** le tiroir (19, 31) comporte un agencement à piston-et-cylindre (28, 22) à titre d'entraînement.

13. Cylindre réglable en flexion selon la revendication 12, **caractérisé en ce que** le tiroir (19, 31) est réalisé à l'une de ses extrémités au moins sous forme d'un piston (23, 24) agencé en déplacement dans un cylindre (25, 26).

14. Cylindre réglable en flexion selon l'une des revendications 1 à 13, **caractérisé en ce que** les soupapes d'échappement sont réalisées sous forme de soupapes à tiroirs (18) avec des tiroirs de soupapes (19).

15. Cylindre réglable en flexion selon la revendication 14, **caractérisé en ce que** les tiroirs de soupapes (19) des soupapes d'échappement (18) sont fixés les uns aux autres en direction axiale.

16. Cylindre réglable en flexion selon l'une des revendications 1 à 13, **caractérisé en ce que** chaque soupape d'échappement (15) comprend un opercule (27) susceptible d'être déplacé en introduction dans l'embouchure du canal de sortie (14).

17. Cylindre réglable en flexion selon la revendication 16, **caractérisé en ce que** le tiroir (31) agit sur les opercules (27) par l'intermédiaire d'une surface inclinée (30).

18. Cylindre réglable en flexion selon l'une des revendications 1 à 17, **caractérisé en ce que** les soupapes d'échappement (15, 18) sont réalisées sous forme de soupapes à auto-ouverture.
